# EUROPEAN PATENT APPLICATION

(11) **EP 3 320 878 A1**
(43) Date of publication of application: **16.05.2018**
(21) Application number: 16198295.4
(22) Date of filing: 10.11.2016
(51) Int. Cl.: A61C 9/00, A61C 8/00

(54) **IMPROVED METHOD FOR DETECTING THE POSITION OF DENTAL IMPLANTS AND REPOSITIONING THE SAME IN DIGITAL FORMAT IN THE RESPECTIVE MODEL IN DIGITAL FORMAT**

(71) Applicant: Kulzer GmbH, 63450 Hanau (DE)
(72) Inventor: PIASINI, Bruno, 23020 Montagna in Valtellina - Sondrio (IT)
(74) Representative: Martegani, Franco

(57) **Abstract**

A method for detecting the position and the relative positioning on the corresponding a master model, the master model being a three-dimensional digital model of the patient's mouth or the part of it involved , of the relative images in digital format (3a), of dental implants (3) on a dental arch (2), the dental arch (2) bearing a superstructures (1) coupled with the same said implants (3), the method comprising: of the type using scanning a scanbody (5) applied on each of said implants (3) and using a corresponding digital positioner scanbody reference model coupled with a digital implant (3a) of the same type as the respective implant (3a) and digital interface (4a) of said superstructure (1) to be configured, characterized in that said digital scanbody reference model is a single non-generic reference model (7) obtained by detecting the form and dimensions of said scanbody (5) directly on said scanbody (5). With respect to the known art, the method of the invention uses a single reference model, consisting of the digitalized image of the same scanbody actually used on the implant. In this way, a specific single reference model is attributed to each scanbody, and dimensional and form errors to which the methods of the known art are subject, are practically annulled. The positioning of the digital implant (3a) and digital interface (4a) on the master model are consequently always repeatable and within the tolerances allowed.

## Description

The present invention relates to an improved method for detecting the position of dental implants and repositioning the same in digital format in the respective model in digital format.

The field of application of the method of the invention relates to implants used for mounting a superstructure on the maxillary or mandibular bone of the patient's mouth. In this type of application, it is essential to know the exact position of the implants, pre-mounted in the patient's mouth, so that the matching with the interface of the superstructure is as correct as possible, as only tolerances in the order of microns are allowed.

For this purpose, the use of positioning devices is known, which in the present description will be called "physical positioners" or "scanbodies", which consist of three-dimensional bodies mounted in correspondence with the implant on the relative interface in the patient's mouth or on a physical model which reproduces the patient's mouth or the part of it involved. The scanbody thus mounted is then subjected to a scanning process together with the patient's mouth or on a physical model which reproduces the patient's mouth or the part of it involved, in order to obtain a three-dimensional digital model of the patient's mouth or the part of it involved, which in the present description is referred to as "Master model". A digitized generic positioner reference model, in turn coupled with a standard interface model of the superstructure and with a standard implant model, is then matched with the part of the master model that represents the scanbody. From the above-mentioned matching of the digitized generic reference model with the part of the master model that represents the scanbody, the management software coherently positions the digitized implant and the digitized interface of the superstructure in the master model.

In the known art described above, the above-mentioned generic positioner reference model consists of the three-dimensional design of the construction project that falls within the scanbody category. As this generic model, however, includes all scanbodies constructed according to the same category, it usually happens that the real scanbody is different, in form and dimensions, with respect to the corresponding generic reference model. These differences in turn cause the onset of positioning errors of the implant and interface of the superstructure on the master model with respect to the positioning in the patient's mouth, making the superstructure constructed with this positioning more than often incompatible with the position of the implants in the patient's mouth and therefore hindering their matching. Furthermore, the re-positioning errors are not always the same as, on different forms and dimensions, the matching algorithm, starting from different positions according to the scanning, will give different results each time, making the necessary repeatability of the results impossible.

The main objective of the present invention is to provide an improved method for detecting the position of dental implants and repositioning the same on the master model which, with respect to the known art described above, is capable of guaranteeing the essential precision and necessary repeatability of the couplings between the scanning of the scanbody present on the master model and the respective digital reference model.

These and other objectives are achieved with the method of claim 1. Preferred embodiments of the method of the invention are indicated in the remaining claims.

With respect to the known art, the method of the invention no longer uses a generic reference model, but a single reference model, consisting of the digitized image of the same scanbody actually used on the implant. In this way, a specific single reference model is attributed to each scanbody and dimensional and form errors, to which the methods of the known art are subject, are practically annulled.

For this reason, moreover, traditional verifications on the matching between the superstructure and the plaster model of the dental arch by the manufacturer of the same are no longer necessary, and the detection of the position of the implant on the physical model or in the patient's mouth, subsequently transferring the correct position on the master model, or more commonly modifying the position of the interface of the superstructure before manufacturing it, also becomes totally useless.

These and other objectives, advantages and characteristics appear evident from the following description of a preferred mode of implementing the method of the invention illustrated as a non-limiting example in the figures of the enclosed drawings:

In these:
- figure 1 illustrates a schematic view of a mandibular arch bearing a superstructure with the relative implants;
- figure 2 illustrates an example of a scanbody for detecting the position of the implants of figure 1;
- figure 3 illustrates a digitalization procedure of the dental arch bearing the scanbody of figure 2, as mounted on the relative implant;
- figure 4 illustrates the digitalized generic positioner reference model according to the type of scanbody of figure 2, completed with the digitalized models of the implant and interface of the superstructure according to the known art;
- figure 5 illustrates a digitalized image of the matching of the generic model of figure 4 with the digitalized image of the scanbody of figure 2, as produced according to the known art;
- figure 6 illustrates the possible form and dimensional errors between the above-mentioned model of figure 4 and the scanbody of figure 2, which cause inaccuracies in the positioning of the digital implant and interface of the superstructure, on the master model;
- figure 7 illustrates the digitalization phase of the scanbody according to the invention;
- figure 8 illustrates the creation of a single digitalized reference model of the scanbody of figure 2 according to the invention and the relative matching with the digital implant and interface of the superstructure;
- figure 9 illustrates the exact coincidence of the form and dimensions of the model of figure 8 with the scanbody of figure 2; and
- figure 10 illustrates a block scheme with the phases of the method of the invention in one of the preferred embodiments.

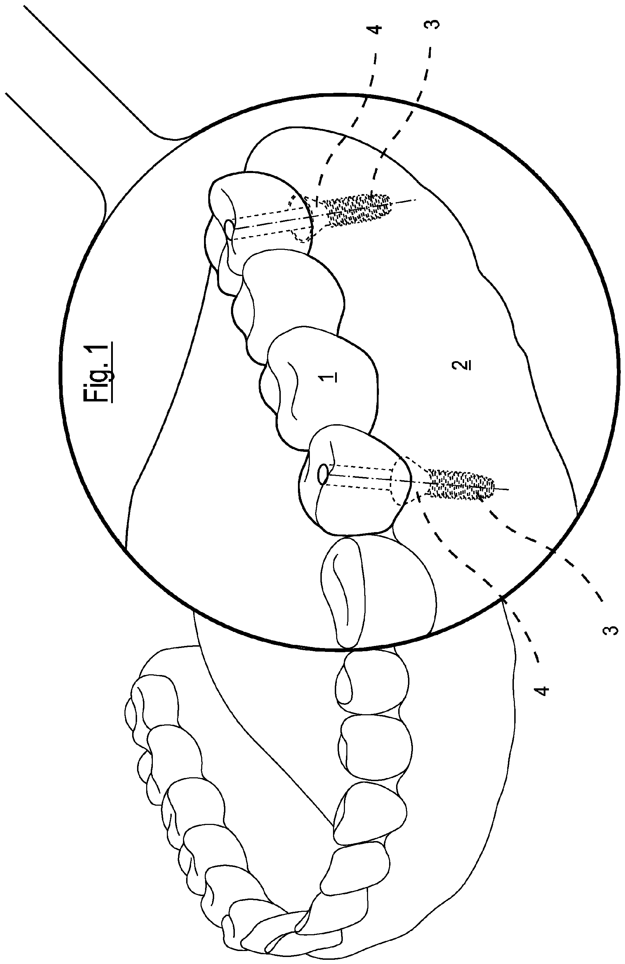

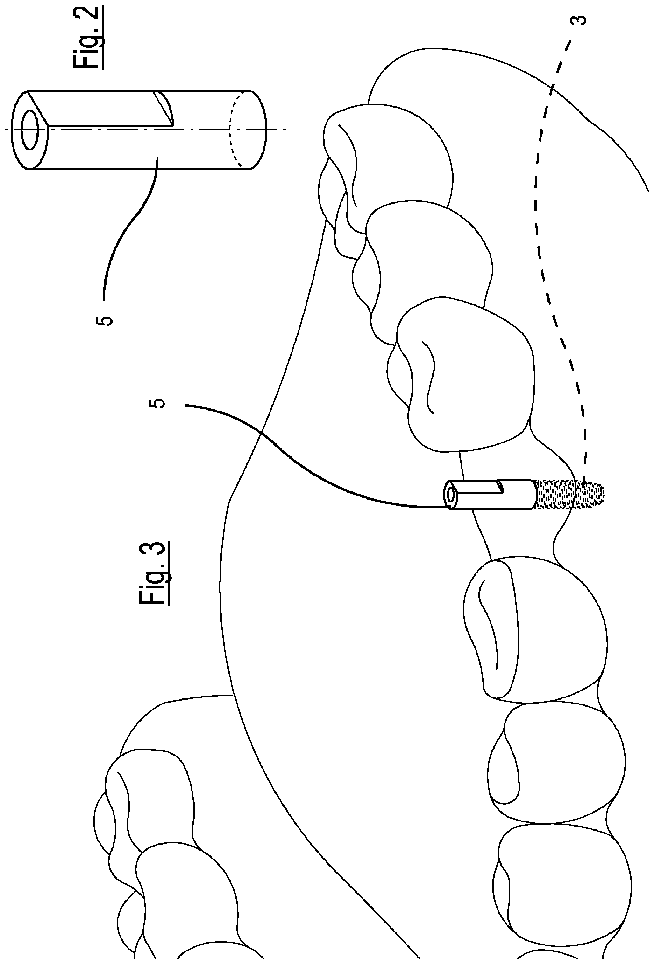

As illustrated in figure 1, a superstructure 1 is fixed to the dental arch 2 by means of implants 3 in correspondence with the interface 4 of the same superstructure 1. From this figure, it can be seen how, for the correct mounting of the superstructure 1 on the respective implant, the perfect matching must be guaranteed between the interface of the implant 3 and the interface 4 of the superstructure 1. For this purpose, scanbodies are used, indicated with 5 in figures 2 and 3, composed of three-dimensional shaped bodies that must be fixed to the implant 3 of figure 1.

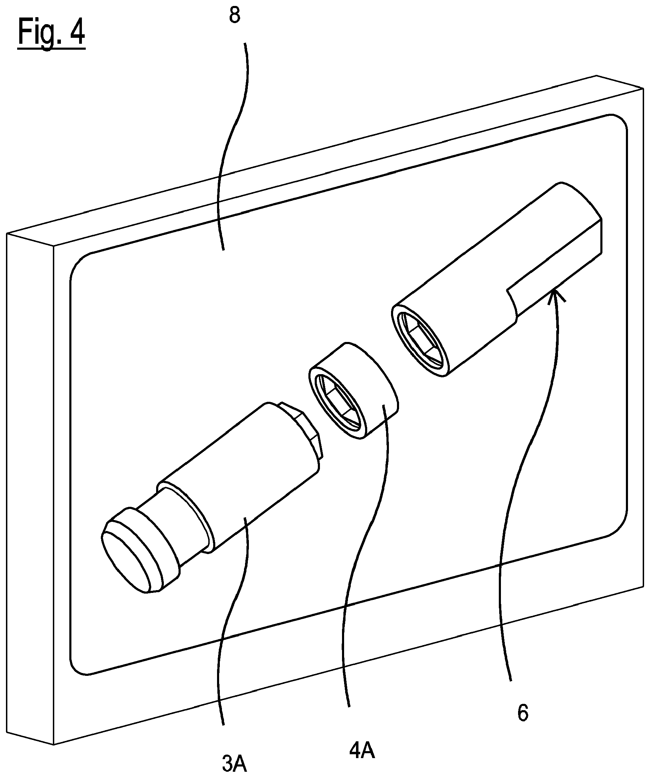

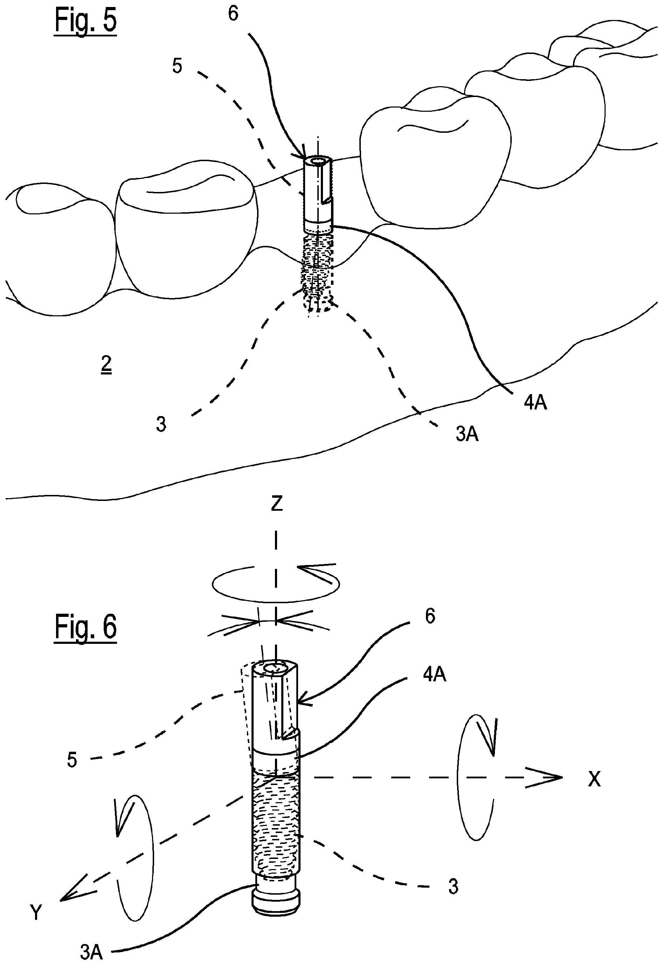

According to the known art (figures 4,5), the three-dimensional drawing of the construction project of the scanbody 5, the digital implant 3a and digital interface 4a of the superstructure 1 is collected in an archive and catalogued according to the type of implant and scanbody, as indicated by the manufacturer of the latter. The three-dimensional drawing of the construction project represents, according to the known art, the digitized generic positioner reference model, reference 6 in figure 4, as displayed on a monitor 8. Again, according to the same known art, for the positioning of the digital implant 3a and digital interface 4a of the superstructure 1 on the master model (figure 5), the above-mentioned generic reference model 6 is used as coupling element with the scanning of the scanbody 5 (figure 5).

The known art described above therefore uses the above generic reference model 6 which, although belonging to the same type of scanbody 5, has, however, forms and dimensions that do not exactly coincide with those of the same scanbody 5, the latter, in fact, being subject to the inevitable tolerances of mechanical processing. Consequently, the above generic reference model 6 is not accurately matched with the scanbody 5, thus causing positioning errors, according to the axes X, Y and Z, and also on the rotation axes X, Y and Z of figure 6 of the digital implant 3a and digital interface 4a on the master model with respect to the positioning of the implant 3 and interface 4 in the patient's mouth.

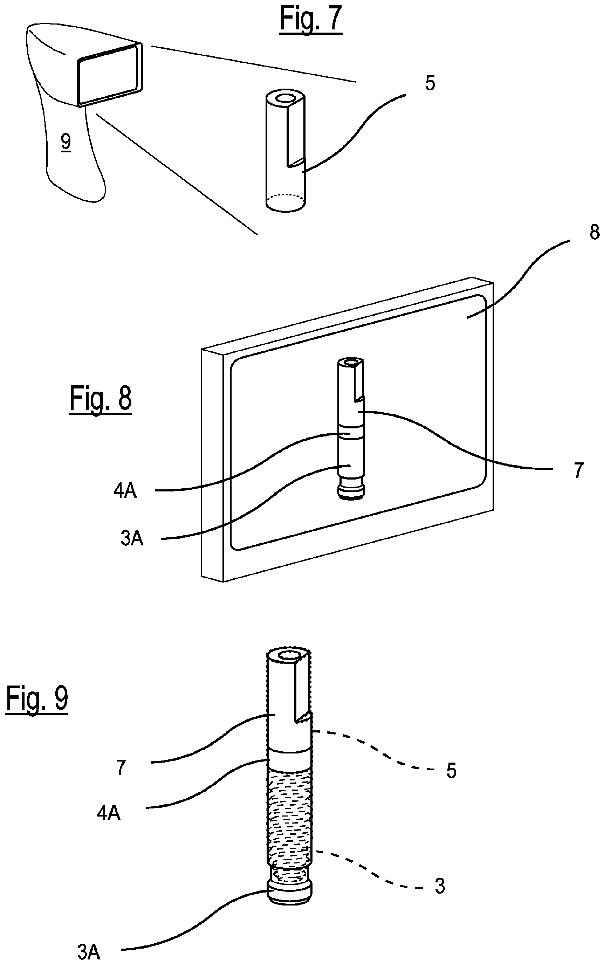

In order to overcome this drawback, the digitalized positioner model 7 of the invention, represented on the screen 8 of figure 8 and called "single reference model 7", is obtained directly from the scanning of the scanbody 5, for example by means of the scanner 9 of figure 7.

It should be understood, however, that instead of the scanner 9, any other instrument can also be used, provided it is suitable for detecting the measurements and forms of the scanbody 5, necessary for reproducing said single reference model 7. As a variant, instead of the scanner 9 of figure 7, a contact measuring machine can be used, for example, for detecting the measurements and forms of the scanbody 5. As illustrated in figure 8, the above-mentioned single reference model 7 is destined for being matched with the respective digital implant 3a and with the digital interface 4a of the superstructure 1 to be designed.

Thanks to the invention, therefore, the single reference model 7 no longer represents a generic reference model which is used for being indistinctly coupled with all the scanbodies produced of the same type, but defines a specific single positioner reference model which exactly reproduces the forms and dimensions of the original scanbody 5 (figure 9).

According to the invention, therefore, the reference model used is no longer the generic model 6 of figure 4, but a specific and single reference model 7, obtained by scanning or otherwise, revealing the form and dimensions of the scanbody 5 actually used on the implant. The single reference model 7 is subsequently matched with the scanning of the scanbody 5 on the master model, thus allowing the correct positioning of the digital implant 3a and digital interface 4a of the superstructure to be configured on the master model and also allowing the superstructure 1 to be configured with the digital interface 4a in a correct position.

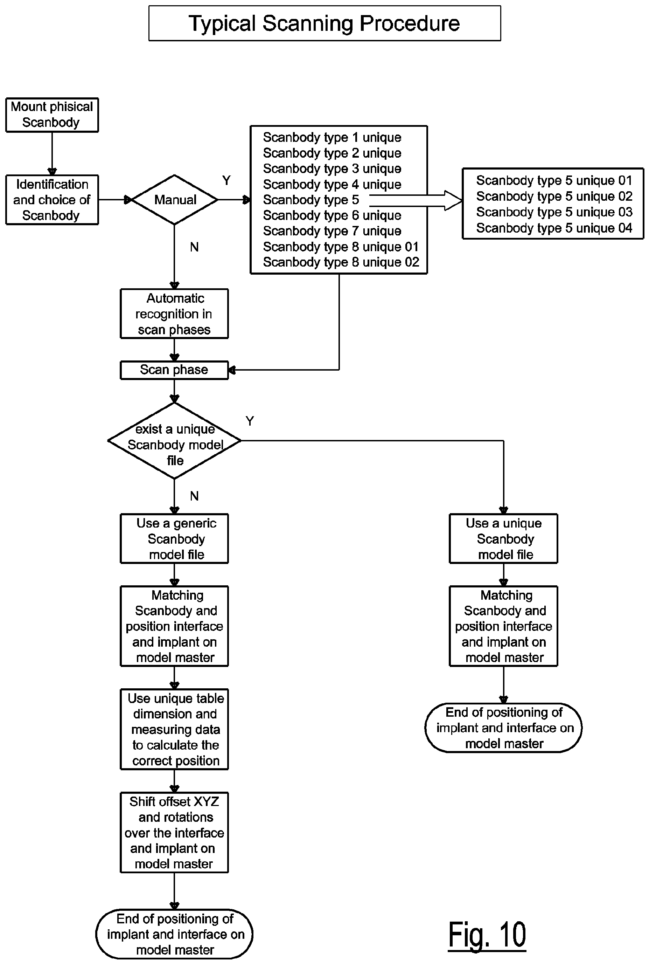

The phases of the method of the invention described above can be summarized in one of the preferred embodiments in the block scheme of Figure 10 which represents the operations to be effected for obtaining the positioning of the digital implant (3a) and interface digital (4a) on the master model.

## Claims

1. A method for detecting the position and the relative positioning on the corresponding master model of the relative image in digital format (3a), of dental implants (3) on a dental arch (2) bearing a superstructure (1) coupled with the same implants (3), of the type using a scanbody (5) applied on said implant (3) and a corresponding digital positioner reference model coupled with a digital implant of the same type (3a) and digital interface (4a) of said superstructure (1) to be configured, **characterized in that** said digital reference model is a single reference model (7) obtained by detecting the form and dimensions directly on said scanbody (5).

2. The method according to claim 1, **characterized in that** a specific single reference model (7) is associated with each scanbody (5), suitable for eliminating dimensional and form errors between the latter and the above-mentioned scanbody (5).

3. The method according to claim 2, **characterized in that** it envisages the scanning of said scanbody (5) for detecting the form and dimensions of the latter in its matching position with said implant (3) and with said interface (4) of the superstructure (1) so as to create a single reference model (7) directly from the results of said scanning effected on the scanbody (5).

4. The method according to claim 2, **characterized in that** it envisages the detection of the form and dimensions of said scanbody (5) by means of measurement instruments, so as to create a single reference model (7) directly from the same scanbody (5).

5. The method according to claim 3, **characterized in that** said measurement means consist of a scanner (9).

6. The method according to claim 4, **characterized in that** said measurement means consist of a contact measuring machine.

7. The method according to claim 2, **characterized in that** it envisages the matching of said single reference model (7) with said scanning of the scanbody (5) on the master model.

8. The method according to claim 2, **characterized in that** said single reference model (7) consists of a table with the needed measurements, detected from said scanbody (5) by means of measurement instruments, to be used for modifying the positioning of the digital implant (3a) and digital interface (4a) of the superstructure to be configured on the master model whose positioning has been obtained using the generic reference model (6) as illustrated in Figure 10.
